# EUROPEAN PATENT SPECIFICATION

(11) **EP 4 588 966 B1**
(45) Date of publication and mention of the grant of the patent: **28.10.2026**
(21) Application number: 23872613.7
(22) Date of filing: 29.09.2023
(51) Int. Cl.: C08J 9/00, B29C 44/00, B29C 44/12, B32B 5/20, B32B 5/24, F16L 59/04, C08J 9/12, C08K 3/00

(54) **FOAMED RESIN INSULATION MATERIAL, AND METHOD FOR MANUFACTURING SAME**
DÄMMSTOFF AUS GESCHÄUMTEM HARZ UND VERFAHREN ZUR HERSTELLUNG DAVON
MATÉRIAU D'ISOLATION EN RÉSINE EXPANSÉE ET SON PROCÉDÉ DE FABRICATION

(30) Priority: 30.09.2022 JP 2022159082
(43) Date of publication of application: 23.07.2025
(73) Proprietor: Meisei Industrial Co., Ltd., Osaka-shi, Osaka 550-0003 (JP)
(72) Inventor: YAMASHIRO Hirotaka, Hamamatsu-shi, Shizuoka 431-1304 (JP); KAWANO Tetsuya, Hamamatsu-shi, Shizuoka 431-1304 (JP); NAKAGAWA Yukio, Hamamatsu-shi, Shizuoka 431-1304 (JP); MORISHITA Yuuichi, Hamamatsu-shi, Shizuoka 431-1304 (JP); NAGAJI Kentarou, Hamamatsu-shi, Shizuoka 431-1304 (JP); MOURI Kengo, Hamamatsu-shi, Shizuoka 431-1304 (JP); NAGAURA Hidenori, Hamamatsu-shi, Shizuoka 431-1304 (JP); FUKAZAWA Junya, Tokyo 136-8515 (JP); HATA Toru, Tokyo 136-8515 (JP); KATO Takuma, Tokyo 136-8515 (JP)
(74) Representative: patcare Patentanwälte Partnerschaft mbB
(86) International application number: PCT/JP2023/035681
(87) International publication number: WO 2024/071394

(56) References cited:
- JP-A- 2008 247 973
- JP-A- 2008 247 973
- JP-A- 2015 048 903
- JP-A- 2016 102 580
- JP-A- 2020 200 894
- JP-A- H1 076 543
- JP-U- H0 632 899
- JP-U- H0 632 899
- US-B1- 8 703 842

## Description

### TECHNICAL FIELD

The present invention relates a foamed resin insulation material, and a method for manufacturing the foamed resin insulation material.

### BACKGROUND ART

Conventionally, when a fluid pipe, a fluid storage container, or the like is thermally insulated with a foamed resin insulation material, in particular, when cold insulation is provided to a low-temperature fluid, in general, a closed-cell foamed resin insulation material such as a rigid polyurethane foam resin is molded in a shape surrounding the pipe or the fluid storage container, and is placed therearound.

However, in a case where the fluid flowing therein causes temperature change, not only the pipe or the storage container but also the insulation material part in contact with the pipe or the storage container is influenced by the temperature change of the fluid, and is expanded or contracted.

In general, a metal is used for the pipe or the storage container, whereas the foamed resin insulation material has a larger linear expansion coefficient than the metal.

In addition, in a case where a fluid flowing in the pipe or a fluid stored in the storage container is a cryogenic fluid, the cryogenic fluid of liquid nitrogen (LN₂) has a temperature of -196°C, and a cryogenic fluid of liquid hydrogen (LH₂) has a temperature of -253°C, for example. In that case, if air enters a gap at the interface between the pipe or the storage container and the foamed resin insulation material, oxygen (liquefaction temperature of -183°C) in the air may be liquefied and liquid oxygen may accumulate therein, so that the accumulated liquid oxygen may cause explosions or fires due to ignition of combustibles (e.g., see JP 2016-176511).

Therefore, it is considered that the pipe or the storage container and the foamed resin insulation material are adhered to each other using an adhesive such that no gap is formed therebetween.

### CITATION LIST

### [PATENT DOCUMENTS]

JP 2008 247973 discloses an insulation material having the features of the preamble of claim 1. JP H06 32899 discloses a fluid piping and equipment of cold storage device comprising a pipe covered with various layers including a layer of glass cloth as a reinforcing material, a layer of foam as a cold insulating/heat insulating material, and a layer of aluminium hydroxide as a refractory material.

### SUMMARY OF THE INVENTION

### PROBLEMS TO BE SOLVED BY THE INVENTION

However, SUS316L as a metal to be generally used for the pipe or the storage container has a linear expansion coefficient α of 10 to 16 ppm/K (note that ppm=1×10⁻⁶), whereas a polyurethane foam resin has a linear expansion coefficient α of 50 to 60 ppm/K. When the cryogenic fluid flows therein, the large difference in the linear expansion coefficient between the metal and the foamed resin insulation material causes thermal stress to act in the insulation material and a crack tends to be formed, so that air may enter through the crack. Furthermore, if the cryogenic fluid is liquid hydrogen, the liquefaction temperature of liquid hydrogen is -253°C, and thus the above-described problem is further increased.

Therefore, an object of the present invention is to solve the above problem, achieve a smaller difference in linear expansion coefficient between a metal and a foamed resin insulation material, reduce generation of thermal stress in the foamed resin insulation material as much as possible, and enable prevention of crack formation.

### SOLUTION TO THE PROBLEMS

The present invention is directed to a resin foam-molded body obtained by foam-molding an unfoamed resin material mixed with a negative thermal expansion material having a volume that is contracted when a temperature rises and that is expanded when a temperature falls.

According to the present invention, the negative thermal expansion material is mixed in the resin foam-molded body. Thus, the negative thermal expansion material is contracted when a temperature rises and is expanded when a temperature falls, and changes expansion/contraction based on temperature change of a fluid, so that change due to elongation and compression is inhibited in the foamed resin insulation material as a whole and difference in the linear expansion coefficient between a metal and the resin foam-molded body can be reduced.

Therefore, a crack can be prevented from being formed in the foamed resin insulation material by the contraction of a pipe or a storage container for cryogenic fluid flowing therein.

Further, the resin foam-molded body, and the fiber sheets each composed of intersecting warp yarns and weft yarns are stacked to create a laminated structure and are integrated with each other.

According to the present invention, the resin foam-molded body and the fiber sheets each composed of intersecting warp yarns and weft yarns are stacked to create a laminated structure and are integrated with each other, whereby reinforcement by fiber is increased in a two-dimensional direction, and the difference in the linear expansion coefficient between the metal and the resin foam-molded body can be further reduced.

In a second aspect of the present invention, fiber sheets each composed of intersecting warp yarns and weft yarns are integrated with the resin foam-molded body at inner and outer faces.

According to the second aspect of the present invention, the above effect based on the first aspect of the present invention can be achieved, and in addition, change due to the elongation and compression of the resin foam-molded body based on temperature change is further inhibited owing to addition of resistance force of the fiber sheets, so that the difference in the linear expansion coefficient between the metal and the resin foam-molded body can be further reduced.

In a third aspect of the present invention, a plurality of layers of the fiber sheets are integrated with the resin foam-molded body.

According to the third aspect of the present invention, the effect of inhibiting the elongation and compression due to temperature change can be enhanced by the plurality of layers of fiber sheets also in a thickness direction.

In a fourth aspect of the present invention, cellulose nanofiber powder is mixed in and integrated with the resin foam-molded body.

According to the fourth aspect of the present invention, the cellulose nanofiber powder is mixed in and integrated with the resin foam-molded body, whereby the linear expansion coefficient of the resin foam-molded body is further reduced, and tends to be close to the linear expansion coefficient of the metal.

In a fifth aspect of the present invention, the negative thermal expansion material is one selected from zirconium tungsten phosphate (Zr₂WO₄(PO₄)₂), zirconium phosphate sulfate (Zr₂SP₂O₁₂), oxide ceramic BiNi1-xFexO₃ having a perovskite structure composed of bismuth/nickel/iron, zirconium tungstate (ZrW₂O₈), or silicon oxide (Li₂O-Al₂O₃-nSiO₂); the unfoamed resin material is one selected from an unfoamed polyurethane resin, an unfoamed polystyrene resin, an unfoamed polyethylene resin, an unfoamed polyester resin, or an unfoamed phenolic resin; and the fiber sheet is a cloth selected from glass fiber, carbon fiber, or aramid fiber.

In a sixth aspect of the present invention, the negative thermal expansion material is zirconium tungsten phosphate (Zr₂WO₄(PO₄)₂), the unfoamed resin material is an unfoamed polyurethane resin, the fiber sheet is a cloth formed of glass fiber, cellulose nanofiber powder is mixed in and integrated with the resin foam-molded body, and the negative thermal expansion material is mixed in the resin foam-molded body by 0.75 vol% or more with respect to a volume of the resin foam-molded body.

In a seventh aspect of the present invention, the negative thermal expansion material is zirconium tungsten phosphate (Zr₂WO₄(PO₄)₂), the unfoamed resin material is an unfoamed polyurethane resin, the fiber sheet is a cloth formed of glass fiber, and cellulose nanofiber powder is mixed in and integrated with the resin foam-molded body by 3 wt% or more with respect to an amount of filled unfoamed resin.

In an eighth aspect of the present invention, the negative thermal expansion material is zirconium tungsten phosphate (Zr₂WO₄(PO₄)₂), the unfoamed resin material is an unfoamed polyurethane resin, the fiber sheet is a cloth formed of glass fiber, cellulose nanofiber powder is mixed in and integrated with the resin foam-molded body by 1 wt% or more with respect to an amount of filled unfoamed resin, a plurality of layers of fiber sheets each composed of intersecting warp yarns and weft yarns is further integrated with the resin foam-molded body, and the negative thermal expansion material is mixed by 0.75 vol% or more with respect to a volume of the resin foam-molded body.

According to the eighth aspect of the present invention, the plurality of layers of fiber sheets and the resin foam-molded body are integrated with each other, whereby, even if an amount of the cellulose nanofiber mixed and an amount of the negative thermal expansion material mixed are small, the linear expansion coefficient can be easily brought close to that of the metal.

In a ninth aspect of the present invention for a manufacturing method, the method includes filling a mold with an unfoamed resin material in which a negative thermal expansion material formed of zirconium tungsten phosphate (Zr₂WO₄(PO₄)₂) is mixed in an unfoamed polyurethane resin so as to be stacked with fiber sheets of glass cloth composed of intersecting warp yarns and weft yarns, and foam-curing and molding a stacked product in the mold.

### BRIEF DESCRIPTION OF THE DRAWINGS

[FIG. 1] FIG. 1 is a cross-sectional view of a fluid transfer pipe.
[FIG. 2] FIG. 2 is a graph showing change in a linear expansion coefficient with respect to change in an added amount of a negative thermal expansion material.
[FIG. 3] FIG. 3 is a longitudinal cross-sectional view of a foamed resin insulation material.
[FIG. 4] FIG. 4 is a graph showing change lines of linear expansion coefficients.
[FIG. 5] FIG. 5 is a graph showing change lines of linear expansion coefficients.
[FIG. 6] FIG. 6 is a graph showing change lines of linear expansion coefficients.
[FIG. 7] FIG. 7 is a graph showing change lines of linear expansion coefficients.
[FIG. 8] FIG. 8 is a graph showing change lines of linear expansion coefficients.
[FIG. 9] FIG. 9 is a graph showing change lines of linear expansion coefficients.
[FIG. 10] FIG. 10 is a conceptual perspective view of a test piece using a foamed resin insulation material a for a liquid nitrogen immersion test.
[FIG. 11] FIG. 11 is a conceptual perspective view of a test piece using a foamed resin insulation material b for the liquid nitrogen immersion test.
[FIG. 12] FIG. 12(a) is a longitudinal cross-sectional-side view of a cooling empirical model of a 2B pipe using liquid nitrogen, FIG. 12(b) is a longitudinal cross-sectional view taken along a line A-A in FIG. 12(a), and FIG. 12(c) is a longitudinal cross-sectional view taken along a line B-B in FIG. 12(a).
[FIG. 13] FIG. 13 is a partial enlarged view of FIG. 12(a).
[FIG. 14] FIG. 14 is a table showing various physical property values.
[FIG. 15] FIG. 15 is a table showing a result of FEM stress analysis.
[FIG. 16] FIG. 16 is a temperature distribution table showing a result of an empirical test.
[FIG. 17] FIG. 17(a) is a chart showing change in the temperature of the foamed resin insulation material a, and FIG. 17(b) is a chart showing change in the temperature of the foamed resin insulation material b.
[FIG. 18] FIG. 18(a) is a graph showing change in a strain amount in the foamed resin insulation material a, and FIG. 18(b) is a graph showing change in a strain amount in the foamed resin insulation material b.
[FIG. 19] FIG. 19 is a table showing thermal stress calculated from a strain amount.
[FIG. 20] FIG. 20(a) is a longitudinal cross-sectional view of a cooling empirical model of a 2B pipe using liquid helium, and FIG. 20(b) is a C-C-line longitudinal cross-sectional view in FIG. 20(a).
[FIG. 21] FIG. 21 is a table showing various physical property values.
[FIG. 22] FIG. 22 is a table showing a result of FEM stress analysis.
[FIG. 23] FIG. 23 is a temperature distribution table showing a result of an empirical test.
[FIG. 24] FIG. 24 is graphs showing change in temperature, FIG. 24(a) being a graph showing change in temperature in first cooling, FIG. 24(b) being a graph showing change in temperature in second cooling.
[FIG. 25] FIG. 25 is a graph showing change in strain amounts in a cooling test.
[FIG. 26] FIG. 26 is a table showing stress calculated from a strain amount.
[FIG. 27] FIG. 27 is a partial enlarged view of a resin foam-molded body.
[FIG. 28] FIG. 28 is a graph showing change in linear expansion coefficients and showing a test result.
[FIG. 29] FIG. 29(A) is an exploded perspective view conceptually showing an adhesive integration method, and FIG. 29(B) is an exploded perspective view conceptually showing a multi-layer-injection integration method.
[FIG. 30] FIG. 30 is a perspective longitudinal cross-sectional view of a resin foam-molded body according to another embodiment.

### DESCRIPTION OF EMBODIMENTS

Hereinafter, embodiments of the present invention will be described with reference to the drawings.

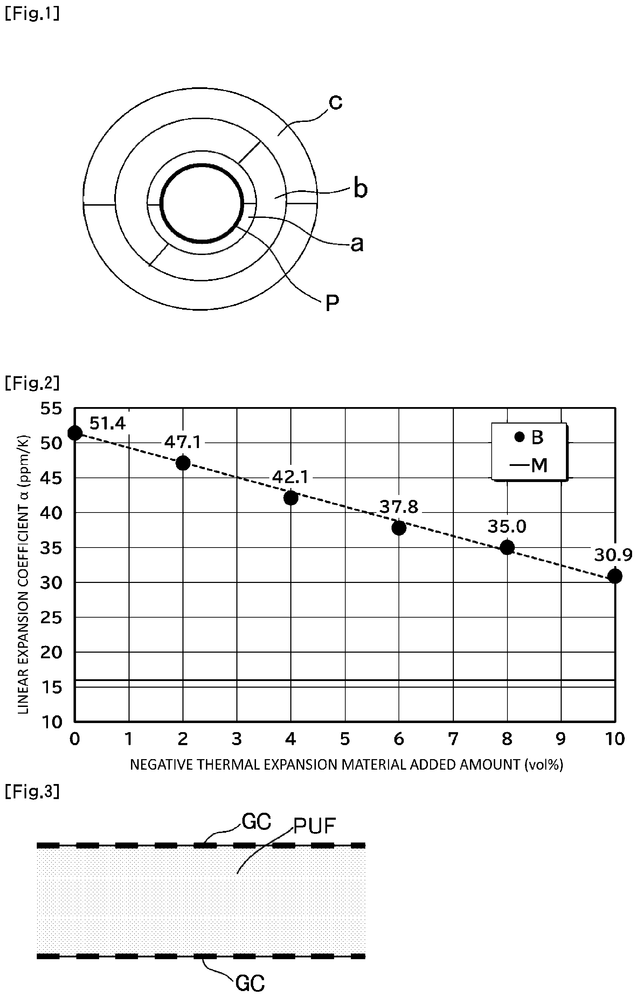

A cross-sectional view of a pipe structure is shown in FIG. 1, as an example in which, for thermal insulation or cold insulation of a transfer fluid, a fluid transfer pipe made of a metal or a fluid storage container to which the pipe is connected is completely surrounded on the peripheral surface thereof with a foamed resin insulation material, so that cold insulation or thermal insulation is provided.

As a metal forming the pipe or the storage container, in one example in which a cryogenic fluid such as liquefied natural gas (LNG) or liquid nitrogen (LN₂) is transferred, SUS316L or the like is often used, and the linear expansion coefficient α of this metal is 10 to 16 ppm/K (note that ppm=1×10⁻⁶).

The foamed resin insulation material is formed of a cold insulation material a, a cold insulation material b, and a cold insulation material c which are stacked. In particular, the cold insulation material a in contact with a metal pipe P is obtained by foaming an unfoamed polyurethane resin (the linear expansion coefficient α of a resin foam-molded body = 50 to 60 ppm/K), which is generally used for the foamed resin insulation material for low temperatures, in a state of being mixed with a white powder (trade name "CERAFIT", produced by NIPPON CHEMICAL INDUSTRIAL CO., LTD.) composed of crystals of zirconium tungsten phosphate (Zr₂(WO₄)(PO₄)₂) as a negative thermal expansion material, and molding the resulting product in a shape along an outer face of the pipe P or the storage container.

In order to foam the polyurethane resin, a foaming agent such as carbon dioxide gas (PUF formulated with water), HFC-PUF, or HFO-PUF is used. In the present disclosure, the cold insulation material a is formed of a urethane foam obtained through foaming with carbon dioxide gas, and isocyanate and polyol to which water as a foaming agent is added react to generate carbon dioxide gas, and are foam-molded.

It is noted that any one of PUF formulated with water, HFC-PUF, or HFO-PUF may be used for the cold insulation material b and the cold insulation material c.

In addition, the lower the density of a molded product is depending on a foaming state, the lower the thermal conductivity is. However, if the density is extremely low, cell walls become thin or open cells are increased, thus radiant heat transfer is increased, and furthermore, the influence of convection appears, so that the thermal conductivity is conversely increased.

In general, thermal conductivity is the lowest at a density of 50 kg/m^{3.}

The zirconium tungsten phosphate has a linear expansion coefficient of -3 ppm/K in a crystal state. The zirconium tungsten phosphate is a material in which a strong bond between the metal atom and oxygen atom is unlikely to cause volume expansion of each unit when heated, and, in which deformation is caused in such a direction that bond angles between the units reduce the space volume in the structure, so that the material thermally contracts almost linearly as the entire crystal according to rising of the temperature over a wide temperature range.

It is noted that the white powder (trade name "CERAFIT", produced by NIPPON CHEMICAL INDUSTRIAL CO., LTD.) composed of crystals of zirconium tungsten phosphate (Zr₂(WO₄)(PO₄)₂) as the negative thermal expansion material exhibits physical properties including a specific surface area of 0.2 m²/g, D50 of 18.7 µm, a bulk specific gravity of 1300 kg/m³, and a linear expansion coefficient α of -3 ppm/K in a temperature range of -100 to 800°C.

### [Experimental example 1]

Next, as shown in a graph in FIG. 2, change in the linear expansion coefficient of a foam-molded body of the above-described polyurethane foam resin was measured in relation to change in an added amount of the negative thermal expansion material.

It is noted that measurement points are represented by Bs in FIG. 2.

According to this measurement result, the linear expansion coefficient of SUS316L as a metal material for a pipe, a storage container, or the like was 16 ppm/K (line M in FIG. 2), whereas the linear expansion coefficient of the foam-molded body was 51.4 ppm/K when no negative thermal expansion material was added. According to the graph, the linear expansion coefficient of the foam-molded body was linearly decreased when the added amount of the negative thermal expansion material was increased, and it is predictable that the linear expansion coefficient of the foam-molded body comes close to the linear expansion coefficient of the metal material (line M in FIG. 2) when the negative thermal expansion material is added by 14 to 15 vol% with respect to the volume of the resin foam-molded body.

It is noted that the added amount of the negative thermal expansion material was calculated on the basis of the bulk specific gravity of the negative thermal expansion material.

### [Experimental example 2]

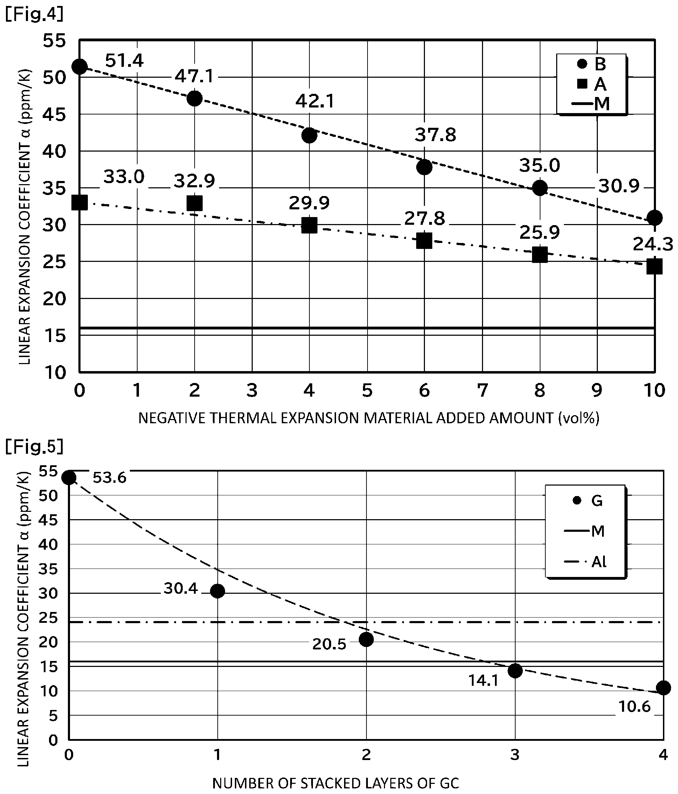

Next, as shown in a longitudinal cross-sectional view of a foamed resin insulation material in FIG. 3, the foamed resin insulation material was produced as a foamed resin insulation material (cold insulation material) a through foaming and molding such that one layer of glass cloth GC composed of intersecting warp yarns and weft yarns and a polyurethane foam (PUF) resin are integrated with each other on an outer surface (front face and back face) of the polyurethane foam (PUF) resin, and change in the linear expansion coefficient of the foamed resin insulation material (cold insulation material) a integrated with the one layer of glass cloth and change in the linear expansion coefficient of a foamed resin insulation material (cold insulation material) b including no glass cloth were examined in relation to change in the added amount of the negative thermal expansion material, and are represented in a graph in FIG. 4.

According to FIG. 4, owing to the integration with the one layer of glass cloth GC, reduction of about 36% was exhibited as a whole even when no negative thermal expansion material was added (measurement points B), and further reduction of about 26% was exhibited when the negative thermal expansion material was added by 10 vol% with respect to the volume of the resin foam-molded body (measurement points A).

### [Experimental example 3]

Next, as shown in FIG. 5, the influence of the number of stacked layers of glass cloth GC was examined, to obtain a change line G (approximate line corresponding to measurement points G).

According to FIG. 5, it was confirmed that, when two layers of glass cloth GC were simultaneously stacked on a surface of the foamed resin insulation material, even when no negative thermal expansion material was added, the linear expansion coefficient was very close to the linear expansion coefficient of SUS316L metal (line M in graph), and was lower than, for example, that of aluminum (linear expansion coefficient α = 24 ppm/K) (line Al in FIG. 5) (20.5 ppm/K).

### [Experimental example 4]

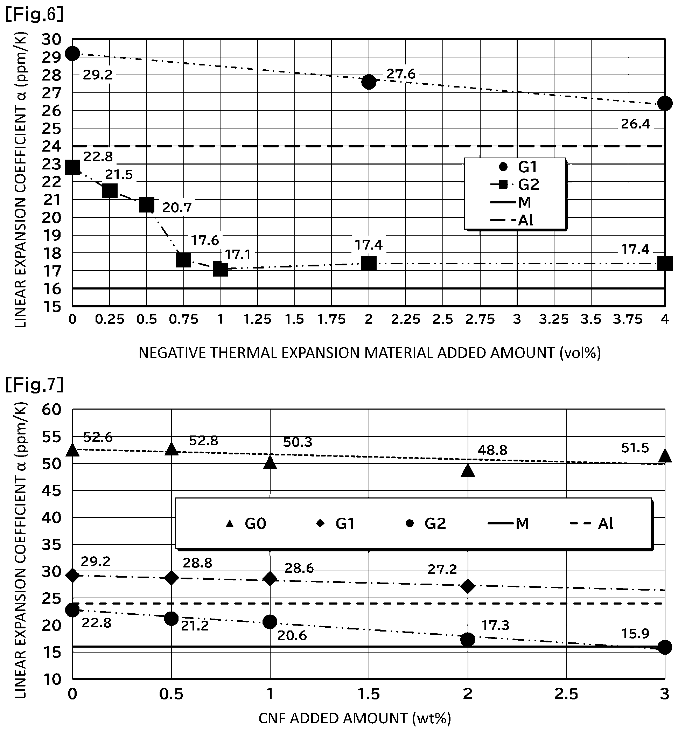

Change in the linear expansion coefficient α was examined in relation to change in the added amount of the negative thermal expansion material when the number of stacked layers of glass cloth GC integrated with a polyurethane foam (PUF) resin was one and when the number of stacked layers was two, and FIG. 6 shows a change line G1 (change line corresponding to measurement points G1) obtained when the number of the stacked layers was one and a change line G2 (change line corresponding to measurement points G2) obtained when the number of the stacked layers was two.

According to the change line G2, it was confirmed that the linear expansion coefficient α was rapidly decreased when the negative thermal expansion material was added by 0.75 to 1 vol% with respect to the volume of the resin foam-molded body.

It is noted that M represents the linear expansion coefficient of SUS316L and Al represents the linear expansion coefficient of aluminum in FIG. 6.

### [Experimental example 5]

Next, cellulose nanofiber (CNF) was added to a polyurethane foam (PUF) resin, and change in the linear expansion coefficient α due to the addition is represented in a graph in FIG. 7.

FIG. 7 is a graph based on a first change line GO corresponding to change in the amount of cellulose nanofiber (CNF) added to a polyurethane foam resin including no glass cloth GC, a second change line G1 corresponding to change in the amount of cellulose nanofiber (CNF) added to a polyurethane foam resin integrated with one layer of glass cloth GC, and a third change line G2 corresponding to change in the amount of cellulose nanofiber (CNF) added to a polyurethane foam resin integrated with two layers of glass cloth GC.

For comparison in the drawing, the linear expansion coefficient of aluminum represented by a line Al, and the linear expansion coefficient α of 16 ppm/K of SUS316L (represented by line M in FIG. 7), were shown.

According to FIG. 7, it was confirmed that, when cellulose nanofiber (CNF) was added by 3 wt% to the polyurethane resin integrated with the two layers of glass cloth GC, the linear expansion coefficient of the polyurethane resin was close to that of metal SUS316L.

It is noted that cellulose nanofiber (CNF) (trade name: S-CNF (water-soluble), produced by Yokogawa Bio Frontier Inc.) was used. In general, this has a weight of one fifth of that of iron, exhibits strength of five times that of iron, and has a linear expansion coefficient α of 0.1 to 0.2 ppm/K (0 to 100°C).

### [Experimental example 6]

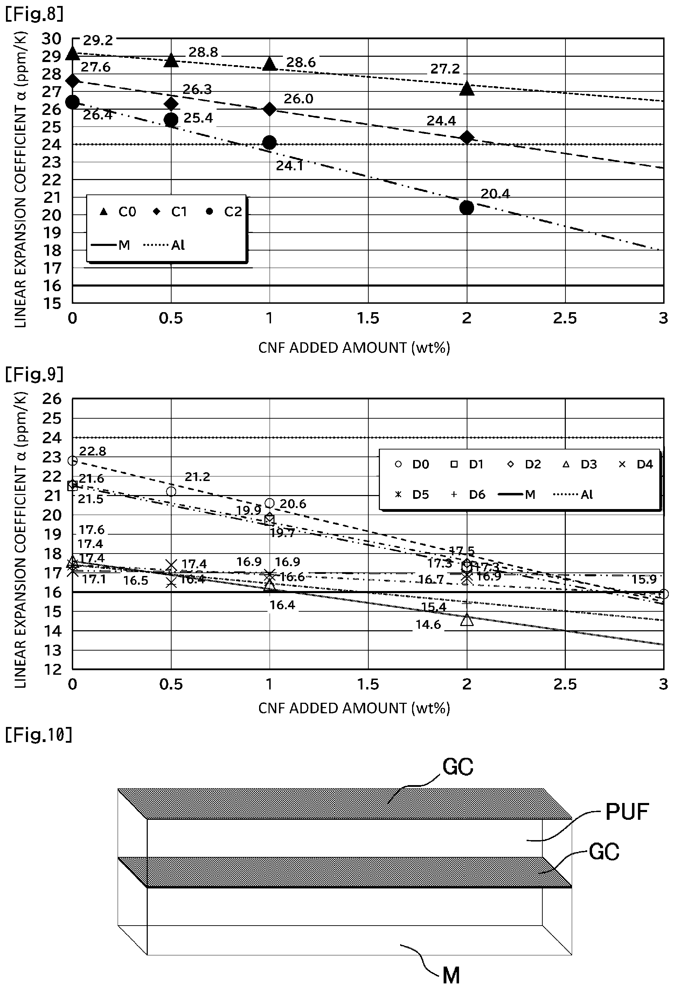

One layer of glass cloth GC was integrated with a polyurethane foam resin, and cellulose nanofiber (CNF) was added to the polyurethane foam resin while the added amount was changed, whereby change lines of linear expansion coefficients α were obtained. FIG. 8 shows a change line CO obtained when a negative thermal expansion material was added by 0 vol%, a change line C1 obtained when the negative thermal expansion material was added by 2 vol%, and a change line C2 obtained when the negative thermal expansion material was added by 4 vol%.

### [Experimental example 7]

Two layers of glass cloth GC were integrated with a polyurethane foam resin, and cellulose nanofiber (CNF) was added to the polyurethane foam resin while the added amount was changed, whereby change lines of linear expansion coefficients α were obtained. FIG. 9 shows a change line DO obtained when a negative thermal expansion material was added by 0 vol%, a change line D1 obtained when the negative thermal expansion material was added by 0.25 vol%, change line D2 obtained when the negative thermal expansion material was added by 0.5 vol%, a change line D3 obtained when the negative thermal expansion material was added by 0.75 vol%, a change line D4 obtained when the negative thermal expansion material was added by 1 vol%, a change line D5 obtained when the negative thermal expansion material was added by 2 vol%, and a change line D6 obtained when the negative thermal expansion material was added by 4 vol%.

According to FIG. 9, it was found that the linear expansion coefficient obtained when a plurality of layers of the fiber sheets were integrated with the resin, cellulose nanofiber (CNF) was added by 1 wt% or more, and the negative thermal expansion material was mixed by 0.75 vol% or more, was able to be close to the linear expansion coefficient α of 16 ppm/K of metal SUS316L (line M in FIG. 9).

### [Experimental example 8] Liquid nitrogen (LN₂) immersion test

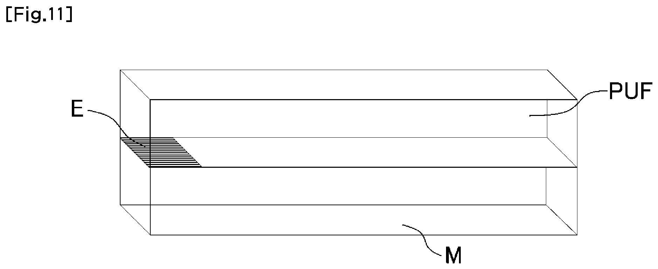

A 200×25×25 mm foamed resin insulation material was produced as a foamed resin insulation material a, as shown in FIG. 10, through foaming and molding such that two layers of glass cloth GC composed of intersecting warp yarns and weft yarns and a polyurethane foam (PUF) are integrated with each other on an outer surface (front face and back face) of the polyurethane foam (PUF) resin. The foamed resin insulation material a containing a negative thermal expansion material mixed by 1 vol% and integrated with the two layers of glass cloth, and a foamed resin insulation material b, as shown in FIG. 11, containing no negative thermal expansion material and including no glass cloth GC were prepared. The foamed resin insulation material a and the foamed resin insulation material b were each adhered/cured to one surface of a 200×25×25 mm SUS316L prismatic pillar M with a urethane-based adhesive, to obtain test pieces.

It is noted that, in the foamed resin insulation material a, a glass cloth surface thereof was adhered to the SUS316L prismatic pillar M. A cycle test in which these test pieces were completely immersed in liquid nitrogen (-196°C) for 8 hours and then were left at ordinary temperature was performed over 5 days, and it was confirmed if a crack was formed at an adhesion interface or the foamed resin insulation material (PUF) close to the interface, due to the difference in the linear expansion coefficient between the foamed resin insulation material and the SUS316L.

As a result of the cycle test in liquid nitrogen (LN₂) immersion, separation E (FIG. 11) starting from the vertexes of the adhered faces was generated at the adhesion interface, or the PUF was ruptured in the foamed resin insulation material b, but deformation such as separation at the adhesion interface and a crack in the polyurethane foam (PUF) resin was not found in the foamed resin insulation material a.

In FEM stress analysis by using SolidWorks Simulation manufactured by Dassault Systemes SolidWorks Corporation, the result indicates that, although principal stress was generated at four vertexes of each adhered face as the maximum stress, a safety factor of such portions was 0.4 and a crack was formed in the foamed resin insulation material b, and a safety factor of such portions was 1.2 and no crack was formed in the foamed resin insulation material a, and this result was consistent with the result obtained as described above by immersing the test pieces in liquid nitrogen (-196°C).

### [Experimental example 9] Pipe cooling test of 2B pipe (SUS316L) using liquid nitrogen (LN₂) having a temperature of -196°C

### (Production of cooling empirical model of 2B pipe)

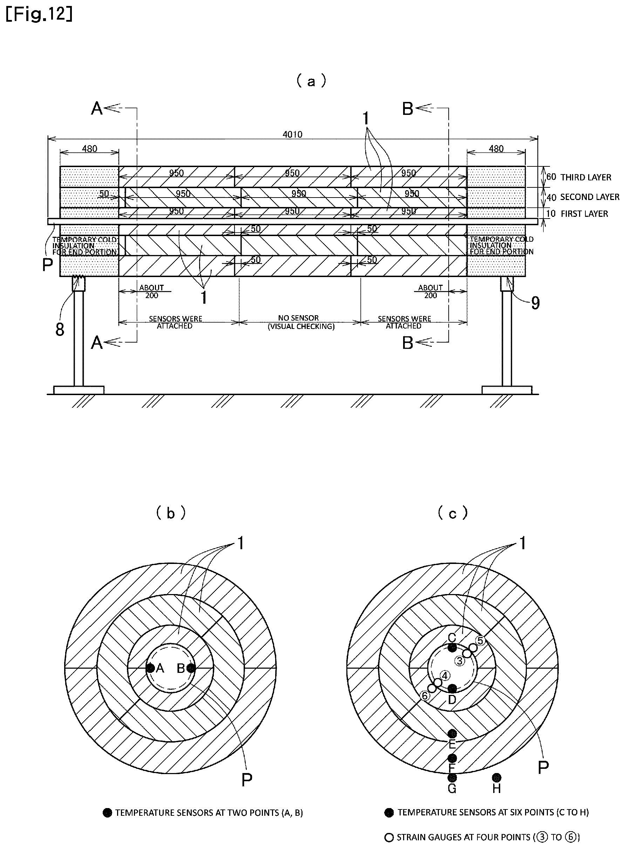

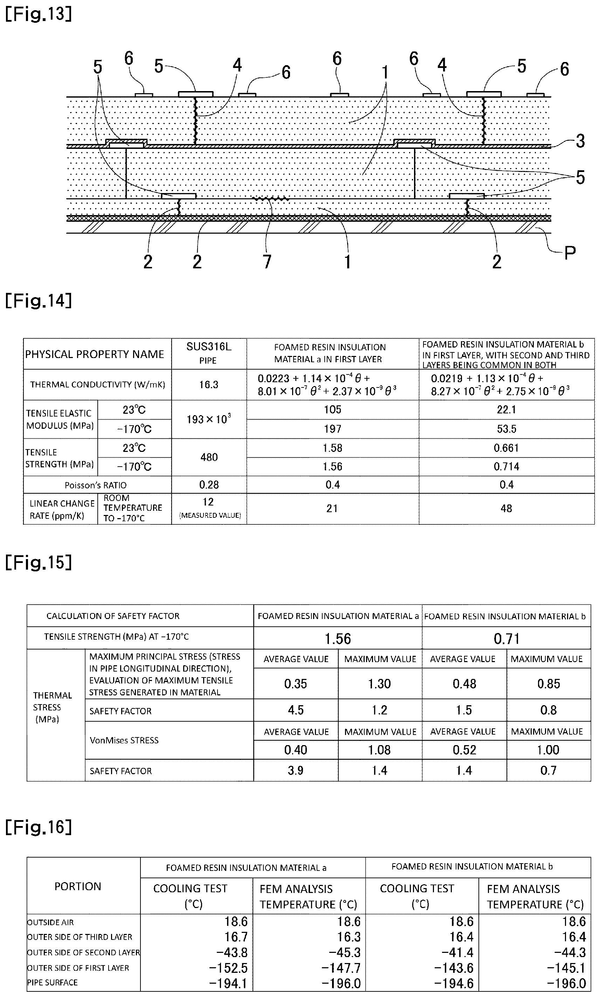

As shown in FIGS. 12(a), (b), (c) and FIG. 13, a 2B SUS316L pipe (pipe outside diameter of 60.5 mm, 50A in nominal size A) according to JIS × 4,000 mm was prepared.

A cold insulation structure was formed as a three-layer structure, and a cold insulation thickness was set to 10 mm for a first layer, 40 mm for a second layer, and 60 mm for a third layer, on the basis of the result obtained by calculating the cold insulation thickness under conditions in which no dew condensation would occur on an outer surface of the cold insulation material and the interface temperature between the cold insulation material in the first layer and the cold insulation material in the second layer became the temperature (-163°C) of liquefied natural gas (LNG) or higher in environmental conditions in which an outside air temperature was 30°C and a relative humidity was 85%.

In order to impart moistureproof/waterproof performance to a pipe cover, an aluminum craft sheet to which two layers of glass cloth (product produced by UNITIKA LTD., product number: L55MN104F, cloth type: leno weave, 2.5 mm mesh) were adhered, was set at an inner face of a concave member of a steel mold for producing the pipe cover, and two layers of glass cloth were set at a convex member of the steel. A polyurethane resin formulated with water, to which a negative thermal expansion material had been added by 1 vol% with respect to the injection volume, was injected and foam-molded so as to be integrated with the glass cloth, to produce a foamed resin insulation material a as the cold insulation material in the first layer.

As a comparison object, a resin foam-molded body 1 having an outer face with the aluminum craft sheet and an inner face with no glass cloth and containing no negative thermal expansion material, was produced as a foamed resin insulation material b.

As shown in FIG. 13, two 2B SUS316L pipes (4,000 mm) were prepared, and a surface of the foamed resin insulation material a as the resin foam-molded body 1 in the first layer and a surface of the foamed resin insulation material b as the resin foam-molded body 1 in the first layer were completely adhered to the outer surfaces of the pipes P, respectively, using a urethane-resin-based adhesive 2. The surfaces of the foamed resin insulation material a at each circumferential joint part were completely adhered to each other, and the surfaces of the foamed resin insulation material b at each circumferential joint part were completely adhered to each other, using the urethane-resin-based adhesive 2 in the same manner.

In addition, a butyl moistureproof tape 5 was adhered to each circumferential and longitudinal joint part of the resin foam-molded body 1 in the first layer.

The resin foam-molded bodies 1 in the second layer and the third layer of the cold insulation material included no glass cloth, and each cold resin foam-molded body 1 was polyurethane foam formulated with water and containing no negative thermal expansion material, and had an inner face with kraft paper and an outer face with an aluminum craft sheet.

A urethane-based adhesive 7 was applied onto mid-portions, each having a diameter of about 30 to 50 mm, of inner faces of the resin foam-molded bodies 1 in the second layer, and the resin foam-molded bodies 1 in the second layer were partially adhered to the outer surface of the foamed resin insulation material a in the first layer and the outer surface of the foamed resin insulation material b in the first layer.

It is noted that each circumferential and longitudinal joint part of the resin foam-molded body 1 in the second layer was a dry joint part with no adhesive.

In addition, the butyl moistureproof tape 5 was adhered to each circumferential and longitudinal joint part of the resin foam-molded body 1 in the second layer, in the same manner as the resin foam-molded body 1 in the first layer.

Subsequently, a polyethylene sheet 3 was spirally wound around an outer face formed of the resin foam-molded body 1 in the second layer for the purpose of moistureproofing/waterproofing, and the resin foam-molded body 1 as the third layer was attached thereon.

The surfaces of the resin foam-molded body 1 in the third layer at each circumferential and longitudinal joint part were also completely adhered to each other using a urethane-resin-based adhesive 4, and the butyl moistureproof tape 5 was adhered to each circumferential and longitudinal joint part of the resin foam-molded body 1 in the third layer. Binding was performed using a stainless steel strip 6 in a circumferential direction, whereby cooling empirical models of the pipes were assembled.

It is noted that, as shown in FIG. 12(a), FIG. 12(b), and FIG. 12(c), strain gauges were adhered to the outer surfaces of the pipes, and the inner faces of the foamed resin insulation material a and the foamed resin insulation material b to measure the amount of contraction due to cooling, and thermocouples were also provided to obtain the temperature of each portion.

In addition, since each SUS316L pipe was contracted in cooling, one end on one side in a pipe longitudinal direction was a fixed end 8, and the other end on the other side was a free end 9.

### (FEM stress analysis of model of 2B pipe)

It was confirmed if a crack was formed in the resin foam-molded body 1 in the first layer by tensile thermal stress generated in the resin foam-molded body (foamed resin insulation material a, b) in the first layer, when the SUS316L pipe was filled with liquid nitrogen of -196°C, on the basis of FEM stress analysis.

It is noted that the FEM stress analysis was performed by using SolidWorks Simulation manufactured by Dassault Systemes SolidWorks Corporation. In addition, values shown in a table (FIG. 14) were used for various physical property values.

It is noted that θ represents temperature in FIG. 14.

As a result of the FEM stress analysis, in a 2B pipe, an average generated thermal stress (tensile stress in a pipe axial direction) in the resin foam-molded body (foamed resin insulation material b) containing no negative thermal expansion material was 0.48 MPa, and a safety factor thereof was 1.5.

In the case of the maximum tensile stress of 0.85 MPa, a safety factor thereof was 0.8 which was less than 1.

In terms of the maximum tensile stress, a crack may be formed in the resin foam-molded body 1 (FIG. 15).

Meanwhile, an average generated thermal stress in the resin foam-molded body (foamed resin insulation material a) containing a negative thermal expansion material and integrated with two layers of glass cloth, was 0.35 MPa, and a safety factor thereof was 4.5.

In the case of the maximum tensile stress of 1.3 MPa, the safety factor thereof was 1.2, and thus, according to a calculation result, a crack is not formed in the foamed resin insulation material a (FIG. 15).

### (Outline of cooling test in empirical model of 2B pipe)

Liquid nitrogen (LN₂) was introduced in the pipe P, and cooling was performed until the temperature of each portion reached a stationary state. After about 30 hours passed, supply of the liquid nitrogen (LN₂) was stopped to allow the temperature to naturally rise, and the temperature was returned to ordinary temperature.

Liquid nitrogen (LN₂) was again introduced in the pipe P, and cooling until the temperature of each portion reached a stationary state was performed twice. After about 30 hours passed, the temperature was allowed to naturally rise. After the temperature returned to ordinary temperature, the test piece was disassembled, and it was confirmed if a crack or the like was formed in the foamed resin insulation material a or b.

### (Result of cooling empirical test of 2B pipe)

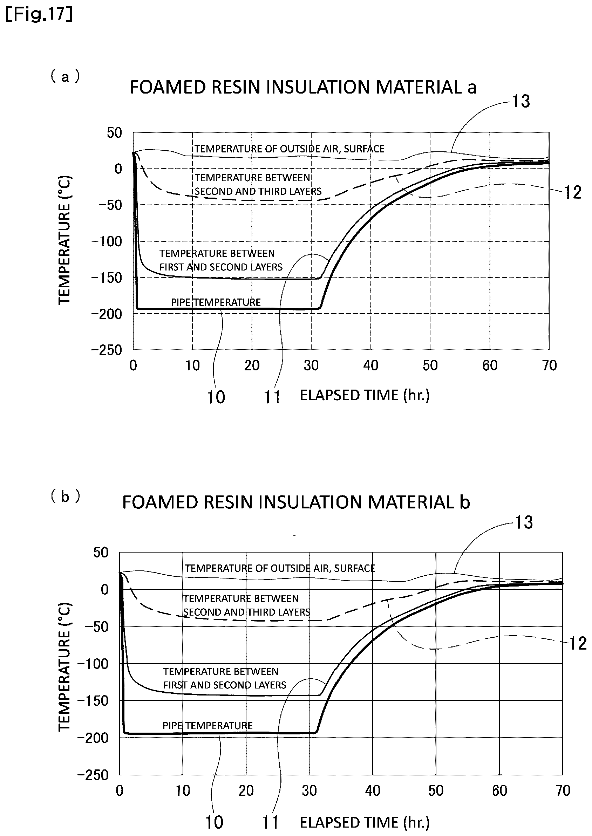

As shown in FIG. 16, FIG. 17(a), and FIG. 17(b), temperature distribution in the foamed resin insulation material a or b in a stationary state in the cooling test, approximately corresponded to values obtained by FEM calculation.

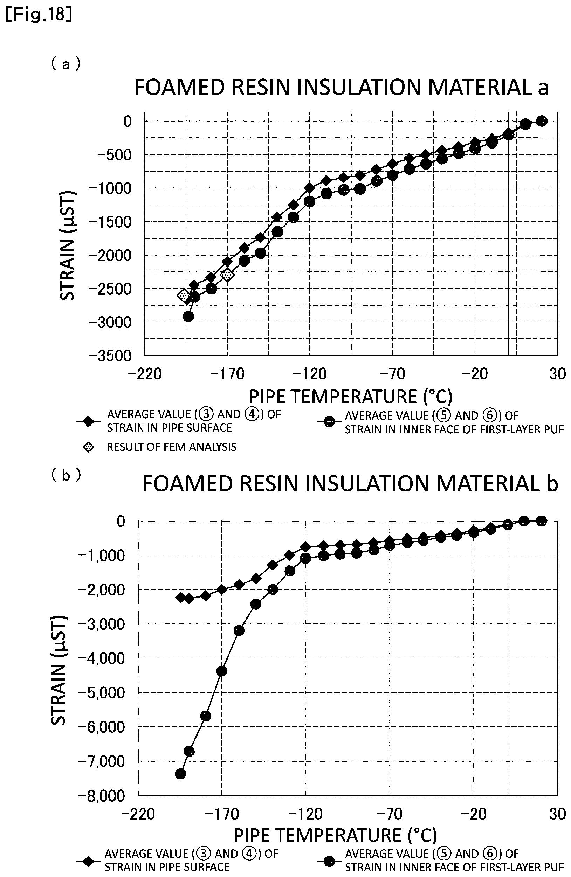

As shown in FIG. 18(a) and FIG. 18(b), according to a measurement result of strain amounts in cooling, it was confirmed that a strain amount in SUS316L and a strain amount in the foamed resin insulation material a indicated substantially the same behavior (FIG. 18(a)), that is, the foamed resin insulation material a followed the behavior of SUS316L.

Meanwhile, it was confirmed that a large strain amount was indicated in the foamed resin insulation material b as compared to that in SUS316L, when the temperature of the pipe P reached around -120°C, and that the foamed resin insulation material b was not able to follow the behavior of SUS316L (FIG. 18(b)).

It is noted that, as shown by curves in FIG. 17(a) and FIG. 17(b) graphed on the basis of values measured by using temperature sensors (A to H) shown in FIG. 12(b) and FIG. 12(c), in the drawings, 10 indicates a value measured at horizontal positions A, B on the pipe surface in FIG. 12(a), and at an upper part C and a lower part D on the pipe surface in FIG. 12(c), 11 indicates a value measured at a point E in FIG. 12(c), 12 indicates a value measured at a point F in FIG. 12(c), and 13 indicates a value measured at points G, H in FIG. 12(c).

As a result of a disassembly examination, in the foamed resin insulation material a, there was neither crack formed in the polyurethane foam (PUF) resin, nor deformation such as separation of the adhesive 2 between the pipe P and the foamed resin insulation material b in the first layer. On the other hand, in the foamed resin insulation material b, there was a crack formed in the polyurethane foam (PUF) resin and deformation such as swelling or separation of the adhesive 2 between the pipe P and the foamed resin insulation material b in the first layer, and thus adhesiveness to SUS316L was not good.

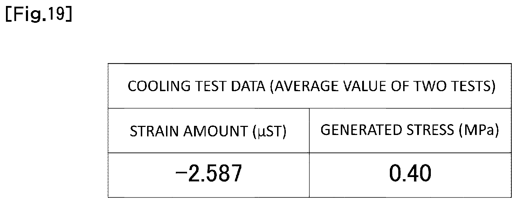

As shown in FIG. 19, thermal stress in the vicinity of the boundary between the pipe P and the foamed resin insulation material a was also able to be calculated from the strain amount, and an average generated thermal stress (tensile stress in a pipe axial direction) as an analysis result was 0.40 MPa (strain amount: -2,587 µST). The obtained result corresponded to the value (VonMises stress: 0.40 MPa) previously obtained on the basis of FEM analysis, and it has been suggested that the pipe cooling test was appropriate and a safety factor corresponding to the maximum value of VonMises stress, which was the previously obtained result, was 1.4 or more.

### [Experimental example 10] Pipe cooling test of 2B pipe (SUS316L) using liquid helium (LHe) (-269°C)

### (Production of cooling empirical model of 2B pipe)

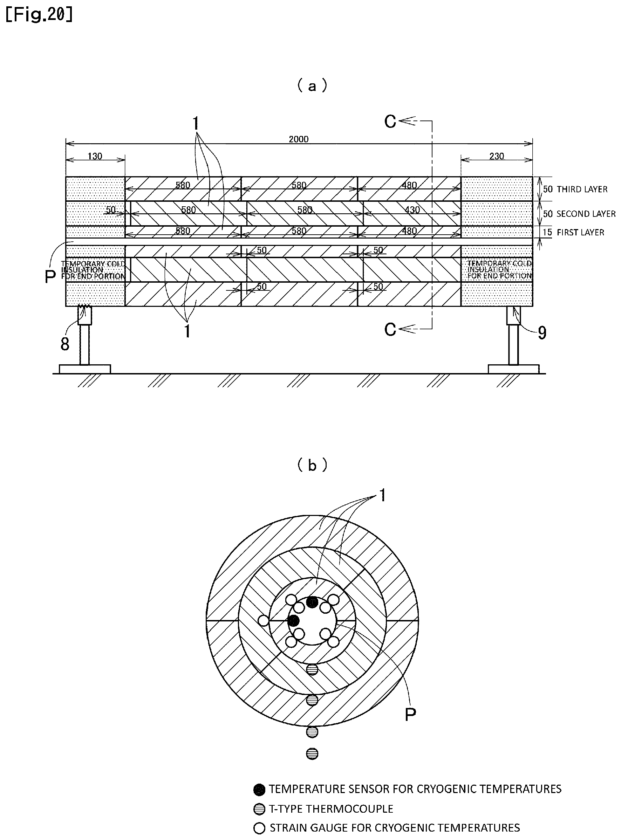

As shown in FIGS. 20(a), (b) and FIG. 13, a 2B SUS316L pipe (pipe outside diameter of 60.5 mm, 50A in nominal size A) according to JIS × 2,000 mm was prepared.

The cold insulation structure was formed as a three-layer structure, and a cold insulation thickness was set to 15 mm for a first layer, 50 mm for a second layer, and 50 mm for a third layer, on the basis of the result obtained by calculating the cold insulation thickness under conditions in which no dew condensation occurred on an outer surface of the cold insulation material and the interface temperature between the cold insulation material in the first layer and the cold insulation material in the second layer became the temperature (-163°C) of liquefied natural gas (LNG) or higher in environmental conditions in which an outside air temperature was 30°C and a relative humidity was 85%.

It is noted that the cooling empirical model of the 2B pipe was produced in the same procedure as in the experimental example 9.

Strain gauges were adhered to the outer surface of the pipe or the inner face of the foamed resin insulation material a to measure the amount of contraction due to cooling, and thermocouples were also provided to obtain the temperature of each portion.

It is noted that a platinum/cobalt resistance thermometer capable of measuring the temperature (-269°C) of liquid helium (LHe) was provided on the pipe side.

In addition, since the SUS316L pipe was contracted in cooling, one end thereof on one side was a fixed end 8, and the other end on the other side was a free end 9 (FIG. 20).

### (FEM stress analysis in model of 2B pipe)

Thermal stress generated in the resin foam-molded body in the first layer, which was tensile thermal stress generated in the resin foam-molded body (foamed resin insulation material a) in the first layer when the SUS316L pipe was filled with liquid helium of -269°C, was confirmed on the basis of FEM stress analysis.

It is noted that the FEM stress analysis was performed by using SolidWorks Simulation manufactured by Dassault Systemes SolidWorks Corporation.

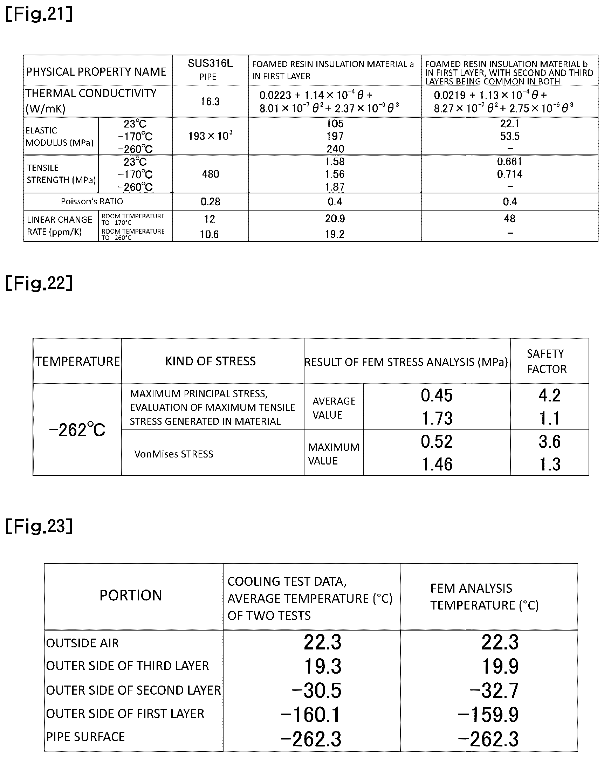

In addition, values shown in a table in FIG. 21 were used for various physical property values.

It is noted that θ represents temperature in FIG. 21.

A result of the FEM stress analysis is shown in a table in FIG. 22.

An average generated thermal stress (VonMises) in the resin foam-molded body (foamed resin insulation material a) containing a negative thermal expansion material and integrated with two layers of glass cloth was 0.52 MPa in the pipe 2B, and a safety factor thereof was 3.6.

In the case of the maximum tensile stress of 1.73 MPa, a safety factor thereof was 1.1, and the calculation result has indicated that no crack is formed in the foamed resin insulation material a.

### (Outline of cooling test in empirical model of 2B pipe)

First, as preliminary cooling of a pipe P, liquid nitrogen (LN₂) was introduced in the pipe, and cooling was performed for about 48 hours until the temperature of each portion reached a stationary state.

Thereafter, supply of liquid nitrogen (LN₂) was stopped, and the liquid nitrogen (LN₂) filled in the pipe P was forcibly discharged. Then, liquid helium (LHe) was introduced such that the pipe was cooled to -269°C, and the temperature was maintained for 2 hours.

Thereafter, the temperature was allowed to naturally rise to ordinary temperature. A cooling test including preliminary cooling in which liquid nitrogen (LN₂) was again introduced in the pipe P, and main precooling in which liquid helium (LHe) was used, was performed twice.

After the temperature was allowed to naturally rise to ordinary temperature, the test piece was disassembled, and it was confirmed if a crack or the like was formed in the foamed resin insulation material a.

### (Result of cooling empirical test of 2B pipe)

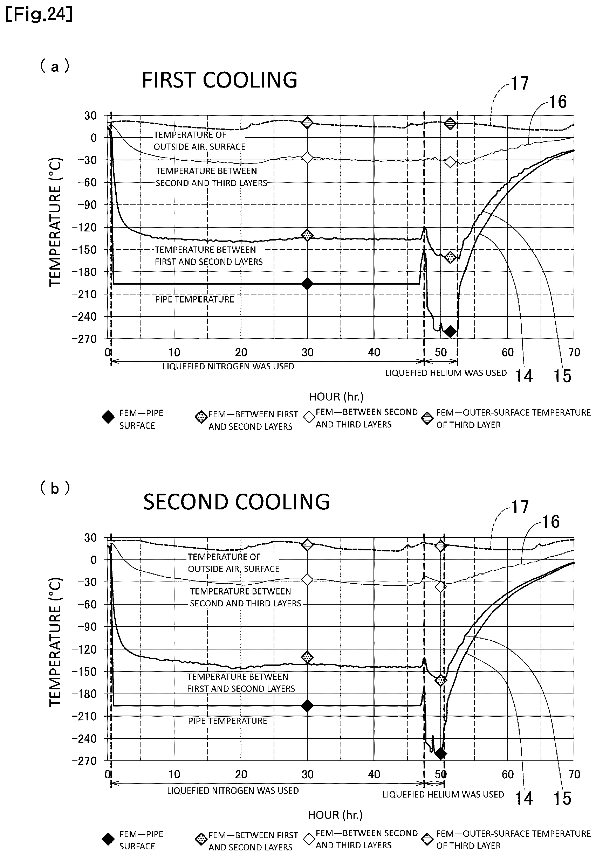

As shown in FIG. 23, FIG. 24(a), and FIG. 24(b), temperature distribution in a stationary state in the cooling test approximately corresponded to values based on FEM temperature analysis.

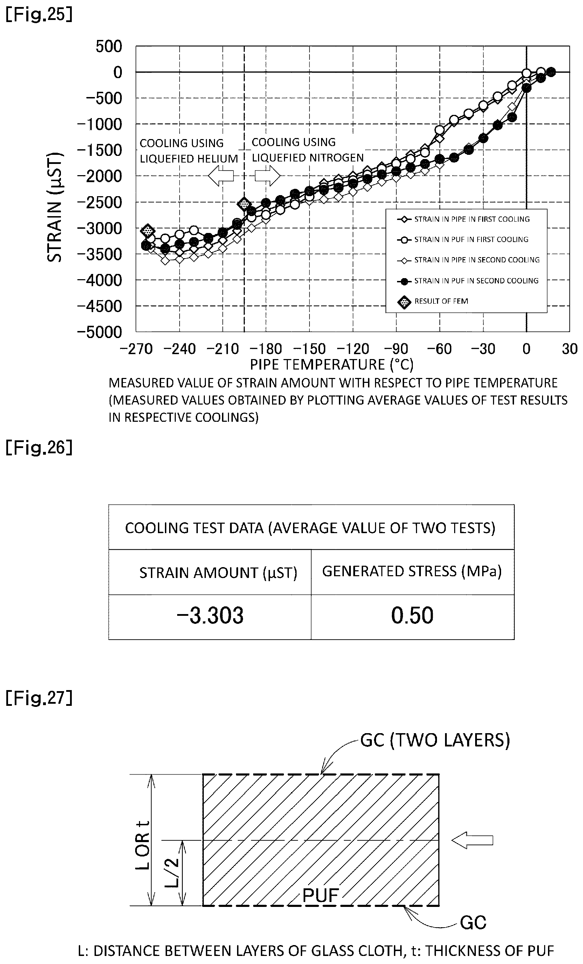

As shown in FIG. 25, according to a measurement result of strain amounts in the cooling test, it has been confirmed that a strain amount in SUS316L and a strain amount in the foamed resin insulation material a indicated substantially the same behavior, that is, the foamed resin insulation material a followed the behavior of SUS316L.

As a result of disassembly examination, there was neither crack formed in the foamed resin insulation material a, nor deformation such as separation of the adhesive 2 between the pipe P and the foamed resin insulation material a in the first layer.

It is noted that measured curves 14 to 17 shown in FIGS. 24(a) and 24(b) were graphed on the basis of values measured by using temperature sensors (A to H) shown in FIG. 12(b) and FIG. 12(c), and, in FIGS. 24(a) and 24(b), 14 indicates a value measured at points A, C on the pipe surface, 15 indicates a value measured at a point E between a PUF cover in the first layer and a PUF cover in the second layer, 16 indicates a value measured at a point F between the PUF cover in the second layer and a PUF cover in the third layer, and 17 indicates a value measured at a point G on an outer surface of the PUF cover in the third layer and at a point H in outside air.

As shown in FIG. 26, thermal stress in the vicinity of the boundary between the pipe P and the foamed resin insulation material a was also able to be calculated from the strain amount, and an average generated thermal stress (tensile stress in a pipe axial direction) as an analysis result was 0.50 MPa (strain amount: -3,303 µST). The obtained result was almost the same as the value (VonMises stress: 0.52 MPa) previously obtained on the basis of FEM analysis, and it has been suggested that the pipe cooling test was appropriate and a safety factor corresponding to the maximum value of VonMises stress, which was the previously obtained result, was 1.3 or more.

### [Experimental example 11] Reinforcing effect by a glass cloth with respect to change in the thickness of polyurethane foam (PUF)

As shown in FIG. 27, in order to prevent a crack in polyurethane foam (PUF) by reducing generation of thermal stress in a foamed resin insulation material at a cryogenic temperature as much as possible, a reinforcement method in which fiber sheets each composed of intersecting warp yarns and weft yarns are integrated with end portions in a thickness direction of a resin foam-molded body 1, is provided.

At this time, where a distance between layers of glass cloth is L, it is predicted that, if L is large, the reinforcing effect by the glass cloth GC is particularly reduced in the center portion (L/2) of the reinforced resin foam-molded body 1.

The polyurethane foam (PUF) integrated with fiber sheets (two layers) was molded, and the linear expansion coefficient (ordinary temperature to -170°C) was measured, whereby an approximation (correlation coefficient: 0.989) was obtained using Gompertz curve which is a representative example of a growth curve, with the thickness of the polyurethane foam (PUF), that is, the distance L between the fiber sheets, as a parameter.

It is noted that, as the fiber sheets (glass cloth), a product (product number: L55MN104F, cloth type: leno weave, 2.5 mm mesh) produced by UNITIKA LTD. was used.

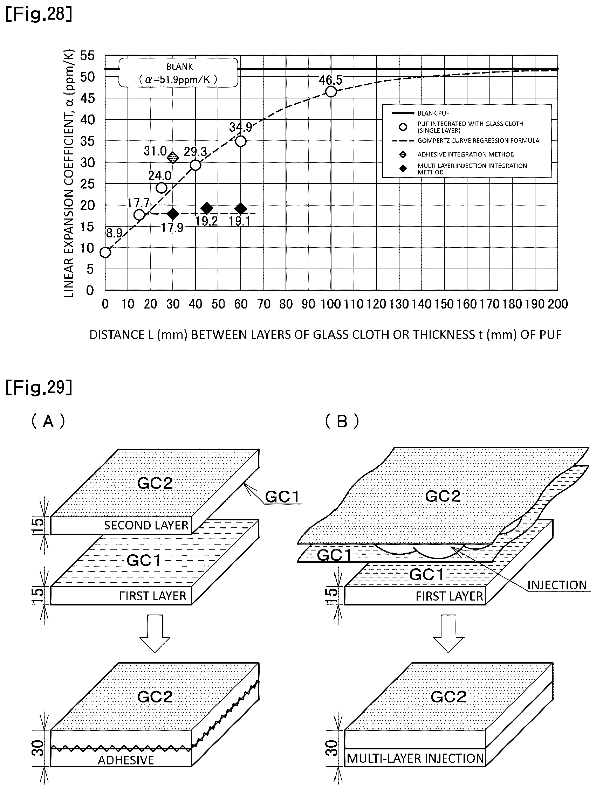

As shown in FIG. 28, as a result of a test, it was confirmed that the larger the distance L between the fiber sheets was, the larger the linear expansion coefficient α was, and, when L was 200 mm or larger, the linear expansion coefficient α was close to the linear expansion coefficient α of 51.9 ppm/K of the polyurethane foam (PUF) not reinforced by the fiber sheets.

In order to prevent a crack in the polyurethane foam (PUF) at a cryogenic temperature, considering the linear expansion coefficients of various metals (SUS316L, α=10 to 16 ppm/K), it is assumed that the distance L between the layers of glass cloth is 15 mm or less (linear expansion coefficient α ≈ 20 ppm/K). In polyurethane foam (PUF) integrated with a glass cloth having L larger than 15 mm, the linear expansion coefficient is increased, and a crack may be formed in the polyurethane foam (PUF) for use as a cold insulation material in the first layer of a pipe or equipment for liquid nitrogen or liquid hydrogen.

In order to avoid this, the following test was performed.

As shown in FIG. 29(B), fiber sheets were stacked at a pitch having L of 15 mm, injection-foaming was sequentially performed, and stacking was sequentially performed, whereby multi-layer test pieces integrated with a glass cloth through injection were produced such that polyurethane foams (PUFs) respectively had a thickness t of 30 (15/15), a thickness t of 45 (15/15/15), and a thickness t of 60 (15/15/15/15) mm. Then, the linear expansion coefficients were measured.

It is noted that, as shown in FIG. 29(A) as a reference, evaluation of the integration method using an adhesive was also performed on the polyurethane foam (PUF) having a thickness t of 30 (15/15).

As shown in FIG. 28, when a multi-layer injection integration method was used, the linear expansion coefficient was 17.9 ppm/K at t of 30 mm, 19.2 ppm/K at t of 45 mm, 19.1 ppm/K at t of 60 mm, and the linear expansion coefficients were approximately equal to the linear expansion coefficient α of 17.7 ppm/K of PUF (single layer) integrated with a glass cloth having a thickness t of 15 mm.

Meanwhile, the linear expansion coefficient of the polyurethane foam (PUF) having a thickness t of 30 (15/15) mm and produced using the adhesive was, due to the effect of the adhesive, 31.0 ppm/K, which was about 1.7 times that obtained when the multi-layer integration method was used.

A cold insulation design of the pipe or the equipment for liquid nitrogen or liquid hydrogen is based on a design concept in which the interface temperature between the foamed resin insulation material in the first layer and the polyurethane foam (PUF) in the second layer is the temperature (-163°C) of liquefied natural gas (LNG) or higher. Thus, when the size of the pipe is increased, a cold insulation thickness of the foam insulation material in the first layer is increased. For example, the cold insulation thickness is 37 mm for a 24B pipe, the linear expansion coefficient of the foamed resin insulation material having a distance L of 37 mm between the layers of glass cloth is increased (α ≈ 27 ppm/K), and a crack may be formed in the polyurethane foam (PUF) at a cryogenic temperature.

Meanwhile, in the multi-layer integration method (FIG. 29(B)), when the foamed resin insulation material has t of 45 (15/15/15) mm, the linear expansion coefficient is not different from that of a single layer having L of 15 mm, and thus a crack in the PUF can be inhibited.

### [Other embodiments]

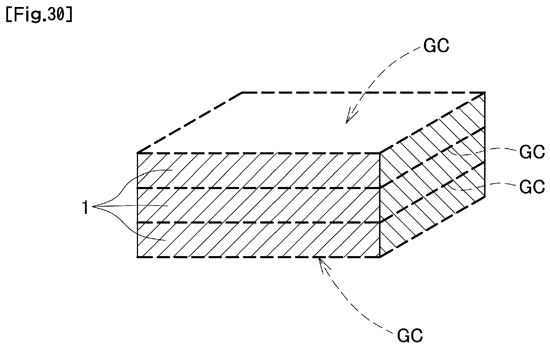

Other embodiments will be described below.
<1> As an example of a foamed resin to be molded, a polyurethane (PUF) resin was used. However, instead of this, a polyisocyanurate (PIR) or a phenolic resin may be used for a foamed body. In addition, as an unfoamed resin material, an unfoamed polystyrene resin, an unfoamed polyethylene resin, or an unfoamed polyester resin may be used.
<2> As the negative thermal expansion material, instead of zirconium tungsten phosphate (Zr₂WO₄(PO₄)₂) (produced by NIPPON CHEMICAL INDUSTRIAL CO., LTD.), zirconium phosphate sulfate (Zr₂SP₂O₁₂) (produced by Tokyo Institute of Technology), oxide ceramic BiNi1-xFexO₃ having a perovskite structure composed of bismuth/nickel/iron, zirconium tungstate (ZrW₂O₈) (produced by JX Advanced Metals Corporation), silicon oxide (Li₂O-Al₂O₃-nSiO₂), or zirconium phosphate (Zr(HPO₄)₂) (produced by Toagosei Co., Ltd.), may be used.
<3> In the fiber sheet, when a plurality of layers of glass cloth composed of intersecting warp yarns and weft yarns are stacked, for example, warp yarns in the first layer glass cloth and warp yarns in the second layer glass cloth may be stacked so as to diagonally intersect. Furthermore, carbon fibers, aramid fibers, or the like may be selected as materials of the fiber sheets instead of the glass cloth.
<4> The resin foam-molded body may be obtained by a spray-formation method using a spray other than the method of filling a mold with an unfoamed resin and performing foam-molding, foam-curing, and molding thereon.
<5> By using the method shown in FIG. 29(B), or a method in which the glass cloth is set so as to be laminar in a mold and the mold is filled with the unfoamed resin to be subjected to foam-molding and foam-curing, the resin foam-molded body and the fiber sheets each composed of intersecting warp yarns and weft yarns may be embedded and formed so as to create a laminated structure within the thickness of the foamed resin as shown in FIG. 30.

It is noted that, although the reference characters have been given for convenience of matching with the drawings as described above, such reference characters are not intended to limit the present invention to the configurations shown in the accompanying drawings. In addition, it should be naturally understood that various embodiments can be made without departing from the scope of the present invention.

## Claims

1. A foamed resin insulation material formed of a resin foam-molded body obtained by foam-molding an unfoamed resin material mixed with a negative thermal expansion material having a volume that is contracted when a temperature rises and that is expanded when a temperature falls, **characterized in that** the resin foam-molded body, and fiber sheets each composed of intersecting warp yarns and weft yarns are stacked to create a laminated structure and are integrated with each other.

2. The foamed resin insulation material according to claim 1, **characterized in that** the fiber sheets each composed of intersecting warp yarns and weft yarns are integrated with the resin foam-molded body at inner and outer faces.

3. The foamed resin insulation material according to claim 1, **characterized in that** a plurality of layers of the fiber sheets are integrated with the resin foam-molded body.

4. The foamed resin insulation material according to claim 1 or 2, **characterized in that** cellulose nanofiber powder is mixed in and integrated with the resin foam-molded body.

5. The foamed resin insulation material according to claim 1, **characterized in that**
the negative thermal expansion material is one selected from zirconium tungsten phosphate (Zr₂WO₄(PO₄)₂), zirconium phosphate sulfate (Zr₂SP₂O₁₂), oxide ceramic BiNi1-xFexO₃ having a perovskite structure composed of bismuth/nickel/iron, zirconium tungstate (ZrW₂O₈), or silicon oxide (Li₂O-Al₂O₃-nSiO₂),
the unfoamed resin material is one selected from an unfoamed polyurethane resin, an unfoamed polystyrene resin, an unfoamed polyethylene resin, an unfoamed polyester resin, or an unfoamed phenolic resin, and
the fiber sheet is a cloth selected from glass fiber, carbon fiber, or aramid fiber.

6. The foamed resin insulation material according to claim 1, **characterized in that**
the negative thermal expansion material is zirconium tungsten phosphate (Zr₂WO₄(PO₄)₂),
the unfoamed resin material is an unfoamed polyurethane resin,
the fiber sheet is a cloth formed of glass fiber, and
cellulose nanofiber powder is mixed in and integrated with the resin foam-molded body, and the negative thermal expansion material is mixed in the resin foam-molded body by 0.75 vol% or more with respect to a volume of the resin foam-molded body.

7. The foamed resin insulation material according to claim 1, **characterized in that**
the negative thermal expansion material is zirconium tungsten phosphate (Zr₂WO₄(PO₄)₂),
the unfoamed resin material is an unfoamed polyurethane resin,
the fiber sheet is a cloth formed of glass fiber, and
cellulose nanofiber powder is mixed in and integrated with the resin foam-molded body by 3 wt% or more with respect to an amount of filled unfoamed resin.

8. The foamed resin insulation material according to claim 1, **characterized in that**
the negative thermal expansion material is zirconium tungsten phosphate (Zr₂WO₄(PO₄)₂),
the unfoamed resin material is an unfoamed polyurethane resin,
the fiber sheet is a cloth formed of glass fiber,
cellulose nanofiber powder is mixed in and integrated with the resin foam-molded body by 1 wt% or more with respect to an amount of filled unfoamed resin, and a plurality of layers of fiber sheets each composed of intersecting warp yarns and weft yarns is further integrated with the resin foam-molded body, and
the negative thermal expansion material is mixed by 0.75 vol% or more with respect to a volume of the resin foam-molded body.

9. A method for manufacturing a foamed resin insulation material, the method comprising filling a mold with an unfoamed resin material in which a negative thermal expansion material formed of zirconium tungsten phosphate (Zr₂WO₄(PO₄)₂) is mixed in an unfoamed polyurethane resin so as to be stacked with fiber sheets of glass cloth composed of intersecting warp yarns and weft yarns, and foam-curing and molding a stacked product in the mold.

## Patentansprüche

1. Dämmstoff aus geschäumtem Kunstharz, gebildet aus einem Kunstharzschaum-Formkörper, der durch Schäumen eines nicht aufgeschäumten Kunstharzmaterials erhalten wird, das mit einem Material mit negativer Wärmeausdehnung gemischt ist, dessen Volumen sich bei steigender Temperatur zusammenzieht und sich bei sinkender Temperatur ausdehnt, **dadurch gekennzeichnet, dass** der Kunstharzschaum-Formkörper und jeweils aus sich kreuzenden Kett- und Schussfäden bestehende Faserlagen zu einer Laminatstruktur übereinander geschichtet und miteinander verbunden sind.

2. Dämmstoff aus geschäumtem Kunstharz gemäß Anspruch 1, **dadurch gekennzeichnet, dass** die jeweils aus sich kreuzenden Kett- und Schussfäden bestehenden Faserlagen an den Innen- und Außenflächen mit dem Kunstharzschaum-Formkörper verbunden sind.

3. Dämmstoff aus geschäumtem Kunstharz gemäß Anspruch 1, **dadurch gekennzeichnet, dass** mehrere Schichten der Faserlagen mit dem Kunstharzschaum-Formkörper verbunden sind.

4. Dämmstoff aus geschäumtem Kunstharz gemäß Anspruch 1 oder 2, **dadurch gekennzeichnet, dass** Zellulose-Nanofaserpulver untergemischt und in den Kunstharzschaum-Formkörper eingearbeitet ist.

5. Dämmstoff aus geschäumtem Kunstharz gemäß Anspruch 1, **dadurch gekennzeichnet, dass** das Material mit negativer Wärmeausdehnung aus einem der folgenden Materialien ausgewählt ist: Zirkonium-Wolfram-Phosphat (Zr₂WO₄(PO₄)₂), Zirkonium-Phosphat-Sulfat (Zr₂SP₂O₁₂), Oxidkeramik BiNi1-xFexO₃ mit Perowskit-Struktur aus Wismut/Nickel/Eisen, Zirkoniumwolframat (ZrW₂O₈) oder Siliziumoxid (Li₂O-Al₂O₃-nSiO₂),
dass das nicht aufgeschäumte Kunstharzmaterial ausgewählt ist aus einem nicht aufgeschäumten Polyurethanharz, einem nicht aufgeschäumten Polystyrolharz, einem nicht aufgeschäumten Polyethylenharz, einem nicht aufgeschäumten Polyesterharz oder einem nicht aufgeschäumten Phenolharz, und
dass die Faserplatte ein Gewebe aus Glasfaser, Kohlefaser oder Aramidfaser ist.

6. Dämmstoff aus geschäumtem Kunstharz gemäß Anspruch 1, **dadurch gekennzeichnet, dass** es sich bei dem Material mit negativer Wärmeausdehnung um Zirkonium-Wolfram-Phosphat (Zr₂WO₄(PO₄)₂) handelt,
dass es sich bei dem nicht aufgeschäumten Kunstharzmaterial um ein nicht aufgeschäumtes Polyurethanharz handelt,
dass die Faserlage ein aus Glasfasern hergestelltes Gewebe ist, und
dass Zellulose-Nanofaserpulver untergemischt und in den Kunstharzschaum-Formkörper eingearbeitet ist, wobei das Material mit negativer Wärmeausdehnung dem Kunstharzschaum-Formkörper in einer Menge von 0,75 Vol.-% oder mehr, bezogen auf das Volumen des Kunstharzschaum-Formkörpers, beigemischt ist.

7. Dämmstoff aus geschäumtem Kunstharz gemäß Anspruch 1, **dadurch gekennzeichnet, dass** es sich bei dem Material mit negativer Wärmeausdehnung um Zirkonium-Wolfram-Phosphat (Zr₂WO₄(PO₄)₂) handelt,
dass es sich bei dem nicht aufgeschäumten Kunstharzmaterial um ein nicht aufgeschäumtes Polyurethanharz handelt,
dass die Faserlage ein aus Glasfasern hergestelltes Gewebe ist, und
dass Zellulose-Nanofaserpulver in einer Menge von 3 Gew.-% oder mehr, bezogen auf die Menge des gefüllten, nicht aufgeschäumten Kunstharzes, untergemischt und in den Kunstharzschaum-Formkörper eingebunden ist.

8. Dämmstoff aus geschäumtem Kunstharz gemäß Anspruch 1, **dadurch gekennzeichnet, dass** es sich bei dem Material mit negativer Wärmeausdehnung um Zirkonium-Wolfram-Phosphat (Zr₂WO₄(PO₄)₂) handelt,
dass es sich bei dem ungeschäumten Kunstharzmaterial um ein nicht aufgeschäumtes Polyurethanharz handelt,
dass die Faserlage ein aus Glasfasern hergestelltes Gewebe ist,
dass Zellulose-Nanofaserpulver in einer Menge von 1 Gew.-% oder mehr, bezogen auf die Menge des gefüllten, nicht aufgeschäumten Kunstharzes, untergemischt und in den Kunstharzschaum-Formkörper eingebunden ist, und dass des Weiteren mehrere Schichten von jeweils aus sich kreuzenden Kett- und Schussfäden bestehenden Faserlagen in den Kunstharzschaum-Formkörper eingearbeitet sind, und
dass das Material mit negativer Wärmeausdehnung in einer Menge von 0,75 Vol.-% oder mehr, bezogen auf das Volumen des Kunstharzschaum-Formkörpers, beigemischt ist.

9. Verfahren zur Herstellung eines Dämmstoffs aus geschäumten Kunstharz, wobei das Verfahren das Befüllen einer Form mit einem nicht aufgeschäumten Kunstharzmaterial, bei dem ein aus Zirkonium-Wolfram-Phosphat (Zr₂WO₄(PO₄)₂) gebildetes Material mit negativer Wärmeausdehnung einem nicht aufgeschäumten Polyurethanharz eingemischt wird, um es mit aus sich kreuzenden Kett- und Schussfäden bestehenden Glasgewebebahnen zu schichten, und das Aushärten des Schaums und das Formen eines geschichteten Produkts in der Form umfasst.

## Revendications

1. Matériau d'isolation en résine expansée formé d'un corps moulé en mousse de résine obtenu par moulage en mousse d'un matériau en résine non expansée mélangé avec un matériau à expansion thermique négative ayant un volume qui est contracté quand la température augmente et qui est expansé quand la température chute, **caractérisé en ce que** le corps moulé en mousse de résine et des feuilles de fibres, composées chacune de fils de chaîne et de fils de trame entrecroisés, sont empilés pour créer une structure stratifiée et sont intégrés les uns avec les autres.

2. Matériau d'isolation en résine expansée selon la revendication 1, **caractérisé en ce que** les feuilles de fibres, composées chacune de fils de chaîne et de fils de trame entrecroisés, sont intégrées avec le corps moulé en mousse de résine au niveau de surfaces intérieures et extérieures.

3. Matériau d'isolation en résine expansée selon la revendication 1, **caractérisé en ce que** plusieurs couches des feuilles de fibres sont intégrées avec le corps moulé en mousse de résine.

4. Matériau d'isolation en résine expansée selon la revendication 1 ou 2, **caractérisé en ce qu'**une poudre de nanofibres de cellulose est mélangée dans et intégrée avec le corps moulé en mousse de résine.

5. Matériau d'isolation en résine expansée selon la revendication 1, **caractérisé en ce que**
le matériau à expansion thermique négative est l'un choisi parmi le phosphate de zirconium-tungstène (Zr₂WO₄(PO₄)₂), le phosphosulfate de zirconium (Zr₂SP₂O₁₂), un oxyde céramique BiNi1-xFexO₃ ayant une structure de perovskite composée de bismuth/nickel/fer, le tungstate de zirconium (ZrW₂O₈), et un oxyde de silicium (Li₂O-Al₂O₃-nSiO₂),
le matériau en résine non expansée est l'un choisi parmi une résine de polyuréthane non expansée, une résine de polystyrène non expansée, une résine de polyéthylène non expansée, une résine de polyester non expansée, et une résine phénolique non expansée, et
la feuille de fibres est une étoffe choisie parmi les fibres de verre, les fibres de carbone, et les fibres d'aramide.

6. Matériau d'isolation en résine expansée selon la revendication 1, **caractérisé en ce que**
le matériau à expansion thermique négative est le phosphate de zirconium-tungstène (Zr₂WO₄(PO₄)₂),
le matériau en résine non expansée est une résine de polyuréthane non expansée,
la feuille de fibres est une étoffe formée de fibres de verre, et
la poudre de nanofibres de cellulose est mélangée dans et intégrée avec le corps moulé en mousse de résine, et le matériau à expansion thermique négative est mélangé dans le corps moulé en mousse de résine à raison de 0,75 % en volume ou plus par rapport au volume du corps moulé en mousse de résine.

7. Matériau d'isolation en résine expansée selon la revendication 1, **caractérisé en ce que**
le matériau à expansion thermique négative est le phosphate de zirconium-tungstène (Zr₂WO₄(PO₄)₂),
le matériau en résine non expansée est une résine de polyuréthane non expansée,
la feuille de fibres est une étoffe formée de fibres de verre, et
la poudre de nanofibres de cellulose est mélangée dans et intégrée avec le corps moulé en mousse de résine à raison de 3 % en poids ou plus par rapport à la quantité de résine non expansée introduite.

8. Matériau d'isolation en résine expansée selon la revendication 1, **caractérisé en ce que**
le matériau à expansion thermique négative est le phosphate de zirconium-tungstène (Zr₂WO₄(PO₄)₂),
le matériau en résine non expansée est une résine de polyuréthane non expansée,
la feuille de fibres est une étoffe formée de fibres de verre,
la poudre de nanofibres de cellulose est mélangée dans et intégrée avec le corps moulé en mousse de résine à raison de 1 % en poids ou plus par rapport à la quantité de résine non expansée introduite, et plusieurs couches de feuilles de fibres, composées chacune de fils de chaîne et de fils de trame entrecroisés, sont en outre intégrées avec le corps moulé en mousse de résine, et
le matériau à expansion thermique négative est mélangé à raison de 0,75 % en volume ou plus par rapport au volume du corps moulé en mousse de résine.

9. Procédé pour fabriquer un matériau d'isolation en résine expansée, le procédé comprenant le remplissage d'un moule avec un matériau en résine non expansée dans lequel un matériau à expansion thermique négative formé de phosphate de zirconium-tungstène (Zr₂WO₄(PO₄)₂) est mélangé dans une résine de polyuréthane non expansée de façon à être empilé avec des feuilles de fibres d'une étoffe de verre composée de fils de chaîne et de fils de trame entrecroisés, et le durcissement en mousse et le moulage d'un produit empilé dans le moule.
